# EUROPÄISCHE PATENTSCHRIFT

(11) **EP 4 316 890 B1**
(45) Veröffentlichungstag und Bekanntmachung des Hinweises auf die Patenterteilung: **30.04.2025**
(21) Anmeldenummer: 23172698.5
(22) Anmeldetag: 11.05.2023
(51) Int. Cl.: B60K 35/23, B60K 35/50, B60K 35/60, B62D 25/14, G02B 27/01

(54) **ELEKTROFAHRZEUG MIT EINER ANORDNUNG ZUR BEFESTIGUNG EINES HEAD-UP-DISPLAYS SOWIE DIE ANORDNUNG EINES HEAD-UP-DISPLAYS IN EINEM ELEKTROFAHRZEUG**
ELECTRIC VEHICLE COMPRISING AN ARRANGEMENT FOR FASTENING A HEAD-UP DISPLAY AND THE ARRANGEMENT OF A HEAD-UP DISPLAY IN AN ELECTRIC VEHICLE
VÉHICULE ÉLECTRIQUE COMPRENANT UN AGENCEMENT DE FIXATION D'UN AFFICHAGE TÊTE HAUTE ET AGENCEMENT D'UN AFFICHAGE TÊTE HAUTE DANS UN VÉHICULE ÉLECTRIQUE

(30) Priorität: 03.08.2022 DE 102022119496
(43) Veröffentlichungstag der Anmeldung: 07.02.2024
(73) Patentinhaber: GEDIA Gebrüder Dingerkus GmbH, 57439 Attendorn (DE)
(72) Erfinder: Rottmann, Ralf, 57489 Drolshagen (DE); Menn, Philipp, 57271 Hilchenbach (DE)
(74) Vertreter: Köchling, Conrad-Joachim

(56) Entgegenhaltungen:
- DE-A1- 102013 212 878
- JP-A- 2016 037 216
- JP-A- 2019 217 982

## Beschreibung

Die Erfindung betrifft eine Anordnung zur Befestigung eines Augmented Reality Head-up-Displays in einem Elektrofahrzeug, bestehend aus einem Modulquerträger, einem an dem Modulquerträger befestigen oder mit diesem verbundenen Tragteil, zwei am Tragteil und am Modulquerträger befestigen, zueinander beabstandet und parallel ausgerichteten Haltern für das Head-up-Display, die jeweils ein zu einer vorderen Schottwand einer Karosserie gerichtetes freies Endteil aufweisen, welches mit der Schottwand verbunden ist, wobei die Halter sich in einer X-Richtung, nämlich in Fahrzeuglängsrichtung erstrecken und Schnittstellen zur Anbindung (Befestigung) des Head-up-Displays aufweisen, wobei das Tragteil im Bereich der daran befestigten Halter von einer Lenksäule des Elektrofahrzeuges durchgreifbar ist.

Sogenannte Augmented Reality Head-up-Displays sind an sich bekannt. Es handelt sich um
Informationsinstrumente, die reale Messangaben um weitere Texte, Bilder oder dreidimensionale Animationen erweitern. Es lassen sich so nützliche Informationen und Warnhinweise im Rahmen der Systemgrenzen direkt ins Blickfeld der Windschutzscheibe projizieren. Diese kurz HUD genannten Displays haben eine Größe von beispielsweise DIN A4 Bögen, so dass erheblich mehr Informationen ins Blickfeld der Windschutzscheibe projiziert werden können. Diese HUDs sind bei Elektrofahrzeugen so an dem Modulquerträger montiert, dass die Projektion auf die Windschutzscheibe des damit ausgestatteten Fahrzeuges gerichtet ist und vom Fahrer sichtbar ist. Das Einbau-Volumen dieser HUDs ist relativ groß, so dass ein entsprechender Einbauraum unterhalb der Windschutzscheibe am Modulquerträger vorhanden sein muss, wobei zudem die Lenksäule an dem eingebauten HUD vorbeigeführt werden muss und kann. Der benötigte Raum ist bei Elektrofahrzeugen vorhanden, da der sonst bei Benzin- oder Dieselfahrzeugen benutzte Motorraum bei Fahrzeugen mit Frontmotor bei E-Fahrzeugen nicht durch irgendwelche Aggregate besetzt ist.

Solche HUDs haben sich an sich bewährt. Es besteht aber ein Bedarf zu deren Verbesserung. Bisher werden solche HUDs unter Zuhilfenahme von Tragteilen montiert, die als Mittler zwischen den Modulträgern und dem HUD dienen. Diese Tragteile werden aus Gewichtsgründen häufig aus Metalldruckguss, insbesondere Magnesium, gefertigt und eingesetzt. Diese Materialien sind extrem teuer, wobei zudem ein unerwünschter Verbrauch an seltenen bzw. teuren Rohstoffen vorliegt. Hinzu kommt, dass bei solchen Materialien besondere Maßnahmen getroffen werden müssen, um die dynamische Steifigkeit in Verbindung mit HUD-Displays zu gewährleisten, bzw. zu steigern, da dies für die Funktion und Wirkungsweise des HUD erforderlich ist. Insbesondere auch dann, wenn solche HUDs in Zukunft auch für autonomes Fahren genutzt werden sollen. Bei entsprechenden Versuchen sind bestimmte Zielvorgaben für die Eigenfrequenzen des HUD und definierte Grenzpegel einzuhalten.

Auch ist es bekannt, solche Tragteile für HUDs aus hochqualifizierten Kunststoffen zu fertigen, die dauerhaft belastbar sind, bei ca. 80°C und eine dauerhafte Standfestigkeit aufweisen. Solche Kunststoffe sind relativ teuer und in der Anwendung kritisch.

Die JP 2016 037216 A offenbart eine Fahrzeug-Instrumententafelstruktur die ein Head-up-Display-Gehäuse für eine Head-up-Display-Vorrichtung umfasst, das innerhalb eines Armaturenbretts angeordnet ist, wobei ein Kühlkörper an dem Display-Gehäuse befestigt ist.

Die JP 2019 217982 A offenbart eine Lenkelementstruktur, die ein Stützelement aufweist, das zwischen einem Hauptkörper des Lenkelements, der sich in einer Fahrzeugbreitenrichtung erstreckt, und einem Armaturenbrett angeordnet ist und eine Head-up-Display-Vorrichtung trägt.

Die DE 10 2013 212 878 A1 offenbart eine Cockpitstruktur eines Fahrzeugs mit einem Cockpit-Querträger und einem Rohbau-Querträger sowie einem Head-Up-Display-Gehäuse, bei dem mittels des Head-Up-Display-Gehäuses eine Stützstruktur vom Cockpit-Querträger zum Rohbau-Querträger geschaffen ist.

Ausgehend von diesem Stand der Technik liegt der Erfindung die Aufgabe zugrunde, eine entsprechende Anordnung für Elektrofahrzeuge zu schaffen, bei der bei relativ geringem Gewicht und hoher dynamischer Steifigkeit die bestimmungsgemäße Anordnung bzw. der bestimmungsgemäße Einbau möglich ist, wobei zudem eine Schonung von seltenen Ressourcen erfolgt und auch eine dauerhafte Belastbarkeit gewährleistet ist. Da die entsprechenden Einbauten zwischen der Fahrgastzelle des entsprechenden Fahrzeuges und der Stirnwand (Schottwand) des Fahrzeuges vorzunehmen ist, ist auch zu berücksichtigen, dass in einem Fall eines frontalen Aufpralles und bei einem folgenden Intrudieren der Stirnwand bzw. der Schottwand eine ausreichende Energieabsorption erfolgen kann und sichergestellt ist.

Zur Lösung dieser Aufgabe schlägt die Erfindung vor, dass jeder Halter aus einem Formteil aus Stahl besteht, das aus einem flachen Stahlblech mit einer geraden oberen Randkante, in Richtung zum in Fahrzeuglängsrichtung vorderen Fahrzeugende gerichtet ist, und einer ebenso dorthin gerichteten, gewinkelten unteren Randkante gebildet ist, wobei die Halter voneinander weg gerichtete Abkantungen an beiden längsverlaufenden Bereichen der Randkanten aufweisen, wobei die an dem Tragteil befestigten ersten Enden konvergierend nach Art einer U-förmigen Profilierung zusammengeführt sind und erste Lochungen für Befestigungsmittel zur Befestigung an dem Tragteil aufweisen, und an den dem Modulträger abgewandten zweiten Enden konvergierend enden und jeweils stirnseitig eine plattenartige Verbindungslasche aufweisen, wobei die Verbindungslaschen die Schnittstelle (Verbindungsstelle) zur Schottwand bilden, wobei im Bereich der oberen Randkanten oder deren Abkantungen Auflager für das Stützen und Befestigen des Head-up-Displays ausgebildet sind.

Die Verbindungslaschen können schweißtechnisch mit den zweiten Enden verbunden sein.

Des Weiteren schlägt die Erfindung ein Elektrofahrzeug mit einer solchen Anordnung vor, welches eine Karosserie mit mindestens 2 A-Säulen, einem mit den A-Säulen verbundenen Modulquerträger, einer mit der Karosserie verbundenen Windschutzscheibe, einem an dem Modulquerträger befestigten oder mit diesem verbundenen Tragteil, zwei am Tragteil und am Modulträger befestigten, zueinander beabstandet und parallel ausgerichteten Haltern für das Head-up-Display, die jeweils ein zu einer vorderen Schottwand der Karosserie gerichtetes freies Endteil aufweisen, welches mit der Schottwand verbunden ist, wobei die Halter sich in Fahrzeuglängsrichtung des Elektrofahrzeuges erstrecken und Schnittstellen zur Anbindung (Befestigung) des Head-up-Displays aufweisen, wobei das Tragteil im Bereich der daran befestigten Halter von einer Lenksäule des Elektrofahrzeuges durchgriffen ist, wobei jeder Halter aus einem Formteil aus Stahl besteht, das aus einem flachen Stahlblech mit einer geraden oberen Randkante, die in Richtung zum in Fahrzeuglängsrichtung vorderen Fahrzeugende gerichtet ist, und einer ebenso dorthin gerichteten, gewinkelten unteren Randkante gebildet ist, wobei die Halter voneinander weg gerichtete Abkantungen an beiden längsverlaufenden Bereichen der Randkanten aufweisen, wobei die an dem Tragteil befestigten ersten Enden konvergierend nach Art einer U-förmigen Profilierung zusammengeführt sind und erste Lochungen für Befestigungsmittel zur Befestigung an dem Tragteil aufweisen, und an den dem Modulträger abgewandten zweiten Enden konvergierend enden und jeweils stirnseitig eine plattenartige Verbindungslasche aufweisen, wobei die Verbindungslaschen die Schnittstelle (Verbindungsstelle) zur Schottwand bilden, wobei im Bereich der oberen Randkanten oder deren Abkantungen Auflager für das Stützen und Befestigen des Head-up-Displays ausgebildet sind.

Dadurch, dass der Halter aus Stahlblech besteht, wird eine umweltfreundliche und hochbelastbare konstruktive Lösung zur Verfügung gestellt. Stahl hat ein wesentlich höheres Elastizitätsmodul als beispielsweise Magnesium oder Kunststoff, so dass eine steife konstruktive Lösung erreicht wird, die den Anforderungen an die dynamische Steifigkeit gerecht wird. Insbesondere werden hierdurch Eigenfrequenzen bei der bestimmungsgemäßen Benutzung reduziert, die auf das HU- Display einwirken können. Durch die Abkantungen wird zudem eine Versteifung des Halters erreicht. Durch die angegebene Formgebung wird zudem eine materialsparende Ausführung des Halters sichergestellt. Die Verbindung der Tragteile mit dem Halter mit dem am Modulträger befestigten Tragteil ist in einfacher Weise durch Befestigungsmittel, beispielsweise Schrauben, ermöglicht, wobei endseitig an den Haltern plattenartige Verbindungslaschen vorgesehen sind, die Verbindungsstelle zur Schottwand bilden. Die Verbindung kann ebenfalls durch Schrauben hergestellt werden. Das an den Haltern befestigbare HU Display weist beispielsweise seitlich vorragende Befestigungslappen auf, die auf die Auflager der oberen Randkanten oder deren Abkantungen aufgelegt und beispielsweise mittels Schrauben daran befestigt werden können, so dass eine sichere Halterung de HU Displays gewährleistet ist.

Durch die gewählte Form und Ausbildung sowie Befestigung der Halter ist auch sichergestellt, dass eine Energieabsorption bei einem Frontalcrash des damit ausgestatteten Fahrzeuges und einem Intrudieren der Stirnwand oder Schottwand in ausreichendem Maße erfolgen kann.

Das entsprechende HU Display projiziert entsprechende Bilder durch Schlitze oder Öffnungen im über dem HU Display angeordneten Bereich des Armaturenträgers oder dergleichen, so dass die vom HU Display erzeugten Bilder auf die Windschutzscheibe projiziert werden können.

Das ausgewählte Stahlblech besteht vorzugsweise aus niedrig legiertem Baustahl, wobei andere Bestandteile des jeweiligen Halters mittels Schweißverfahren befestigt werden.

Bevorzugt ist dabei vorgesehen, dass der der Außenseite des Elektrofahrzeuges, also der Tür näherliegende Halter nur ein Auflager für das Head-up-Display aufweist.

Auch ist bevorzugt, dass der der Außenseite des Elektrofahrzeuges ferner liegende also der Fahrzeugmitte benachbarte Halter zwei voneinander in Längsrichtung beabstandete Auflager für das Head-up-Display aufweist.

Durch diese Anordnung wird eine Dreipunktauflage des HU Displays an den Haltern sichergestellt, die eine einfache Montage und eine sichere Montage ermöglicht und die Halterung mit ausreichender Steifigkeit sicherstellt.

Bevorzugt ist ferner vorgesehen, dass jeder Halter nahe des ersten Endes zwischen den Abkantungen die ersten Lochungen für Befestigungsmittel zur Verbindung mit dem Tragteil des Modulquerträgers aufweist.

Diese Maßnahme dient zur sicheren Anordnung und Befestigung des Halters an dem jeweiligen Tragteil. Aus dem gleichen Grunde ist vorgesehen, dass jeder Halter nahe der gewinkelten unteren Randkante und zwar auch nahe des Winkels zweite Lochungen für Befestigungsmittel zur Verbindung mit dem Tragteil des Modulquerträgers aufweist.

Durch diese Anordnung ist nach der Befestigung der Halter eine hohe Lagesicherheit und auch eine hohe Steifigkeit der Lösung gewährleistet.

Bevorzugt ist zudem vorgesehen, dass die Auflager für das Head-up-Display aus Kunststoff bestehen, vorzugsweise aus PP oder PA, vorzugsweise mit Glas- und/ oder Kohlefasern verstärkt, wobei der Faserfüllanteil vorzugsweise bei 30% + 5% liegt.

Durch diese Ausgestaltung wird erreicht, dass Schwingungen, die beim Betrieb des Fahrzeuges und bei Benutzung der Einrichtung auf die Halter wirken, gedämpft werden, so dass die Schwingungsübertragung von den Haltern auf das HU Display weitestgehend unterbunden ist.

Eine fertigungstechnisch bevorzugte und die Dauerbelastbarkeit sicherstellende Ausgestaltung wird darin gesehen, dass die Auflager aus spritzfähigem Werkstoff bestehen und jeweils einen Blockkörper mit eingesetztem Gewinde an der Abkantung der oberen Randkante des Halters aufweisen, der über eine Querung am Halter mit einem Gegenlager an der Abkantung der unteren Randkante gießtechnisch verbunden ist.

Die Auflager sind dadurch sicher fixiert, dass sie einerseits mit dem Blockkörper auf der oberen Randkante des Halters aufgeformt sind und andererseits über die Querung mit einem Gegenlager an der Abkantung der unteren Randkante verbunden sind, so dass die dauerhafte Lagesicherung gewährleistet ist.

Ferner ist bevorzugt, dass die plattenförmigen Halter in Richtung X und Z einstellbar sind.

Durch diese Einstellbarkeit ist eine exakte Positionierung der HUD Auflager-Flächen möglich.

Zudem ist bevorzugt vorgesehen, dass in die Auflager Gewindebuchsen aus Edelstahl zur Befestigung des Head-up-Displays eingebracht sind.

Hierdurch wird die dauerhafte Befestigung des HU Displays an den Auflagern sichergestellt.

Des Weiteren ist bevorzugt vorgesehen, dass mindestens eine plattenartige Verbindungslasche eine Schnittstelle oder Aufnahme, insbesondere eine Zentrierungsbuchse, als Toleranzausgleichselement für einen Referenzbolzen aufweist, welcher an der Schottwand oder Stirnwand des Fahrzeugs befestigt ist.

Ein solcher Referenzbolzen ist ein Zentrierbolzen, der Hilfestellung bei der lagerichtigen Montage leistet.

Hierdurch ist es in einfacher Weise möglich, die Befestigungsstellen an der Schottwand bzw. an der Stirnwand korrekt einzustellen und die Halter exakt auszurichten.

Des Weiteren ist bevorzugt vorgesehen, dass die Stahlteile mit einer Korrosionsschutzschicht ausgerüstet sind, vorzugsweise einer galvanischen Zink-Beschichtung.

Ein Ausführungsbeispiel der Erfindung ist in der Zeichnung dargestellt und im Folgenden näher beschrieben.

Es zeigt:
- Figur 1: eine Darstellung der wesentlichen Einzelheiten des Erfindungsgegenstandes in einer Montagelage;
- Figur 2: desgleichen in Explosionsdarstellung;
- Figur 3: die Halter in Einzeldarstellung;
- Figur 4: eine Einzelheit in Ansicht;
- Figur 5 und 6: weitere Einzelheiten in Ansicht;

In den Zeichnungsfiguren sind nicht das Elektrofahrzeug, sondern nur die erfindungswesentlichen Teile gezeigt.

Es handelt sich um eine Anordnung zur Befestigung eines Augmented Reality Head-up-Displays 1, welches in der Einbausituation mittels eines Modulquerträgers 2 an den beiden A-Säulen an der Karosserie befestigt ist. An dem Modulquerträger ist ein Tragteil 3 befestigt oder mit diesem verbunden. Der Modulquerträger 2 und das Tragteil 3 weisen Befestigungsmöglichkeiten für die später noch beschriebenen Halter 4, 5 des HU Displays 1 auf. Dazu sind am Modulquerträger 2 zwei Laschen 6 befestigt, die Befestigungslochungen aufweisen. Am Tragteil 3 sind ebenfalls Befestigungslochungen 7 vorgesehen. Am Tragteil 3 und am Modulträger 2 sind die beiden parallel zueinander ausgerichteten und mit Abstand angeordneten Halter 4, 5 für das HU Display 1 befestigt. Die Halter 4, 5 weisen jeweils ein zu einer vorderen Stirnwand oder Schottwand der Karosserie, die nicht dargestellt ist, gerichtetes freies Endteil 8, 9, welches jeweils mit der Schottwand verbunden wird.

Die Halter 4, 5 erstrecken sich im Wesentlichen in Richtung der Fahrzeuglängsachse, die mit "X" in der Zeichnung dargestellt ist. Die Halter 4, 5 weisen Schnittstellen zur Anbindung also Befestigung des HU Displays 1 auf. Zudem ist das Tragteil 3 in der Montagesolllage im Bereich der daran befestigten Halter 4, 5 von einer Lenksäule des Elektrofahrzeuges durchgriffen.

Jeder Halter 4, 5 besteht aus einem Formteil aus Stahl, das aus einem flachen Stahlblech mit einer geraden oberen Randkante 10, 11 in Richtung zum in Fahrzeuglängsrichtung X vorderen Fahrzeugende hin gerichtet ist. Jeder etwa dreieckförmige Halter 4, 5 weist zudem eine untere Randkante 12, 13 auf, die rechtwinklig abgewinkelt verläuft. Die Halter 4, 5 weisen jeweils voneinander weg gerichtete Abkantungen 14, 15 bzw. 16, 17 auf, so dass die einander zugewandten Flächen der Halter 4, 5 eben ausgebildet sind und nur die abgewinkelten Abkantungen 14, 15, 16, 17 nach außen abragen, so dass eine im Wesentlichen ebene Anlagefläche zwischen den Haltern 4, 5 für das HU Display 1 gebildet ist.

Die an dem Tragteil 3 befestigten ersten Enden 19, 20 der Halter 4, 5 bilden mit ihren Randkanten 10, 11 bzw. 12, 13 zueinander konvergierende Bereiche, die nach Art einer U-förmigen Profilierung im Endbereich 19, 20 zusammengeführt sind und in den zwischen den Abkantungen 14, 16 bzw. 15, 17 liegendem Bereichen erste Lochungen 21, 22 zur Befestigung an dem Tragteil 3 aufweisen. Die Lochungen 21, 22 sind etwa koaxial zu den Lochungen der Laschen 6 ausgerichtet, so dass hierdurch Befestigungsmittel geführt und angebracht werden können. Die dem Modulquerträger 2 abgewandten zweiten Enden der Halter 4, 5 weisen konvergierende Randkanten 10, 12 bzw. 11, 13 auf und sind endseitig jeweils stirnseitig mit einer plattenartigen Verbindungslasche 23, 24 versehen. Diese Verbindungslaschen 23, 24 bilden die Schnittstelle (Verbindungsstelle) zur nicht dargestellten Schottwand. Im Bereich der oberen Randkanten 10, 12 bzw. entsprechenden Abkantungen 14, 15 sind Auflager 25, 26, 27 für das Stützen und Befestigen des HU Displays 1 ausgebildet, wozu das HU Display 1 entsprechende Befestigungsvorsprünge 28, 29, 30 aufweist. In diesen miteinander korrespondierenden Bestandteilen sind entsprechende Lochungen für Befestigungsmittel vorgesehen.

Der in Querrichtung, also in Y-Richtung, der Außenseite des Elektrofahrzeuges ferner liegende Halter 4 weist zwei voneinander in Längsrichtung beabstandete Auflager 25, 26 für das HU Display 1 auf.

Der der Außenseite des Elektrofahrzeuges näher liegende Halter 5 weist nur ein Auflager 27 für das HU Display 1 auf. Während jeder Halter 4, 5 zwischen den Abkantungen 16, 19 bzw. 17, 20 die ersten Lochungen 21, 22 für Befestigungsmittel zur Verbindung mit dem Tragteil 3 oder dem Modulquerträger 2 bei den Laschen 6 aufweist, weist jeder Halter 4, 5 nahe der gewinkelten unteren Randkante 12, 13 und zwar im Bereich der Abwinklung zweite Lochungen 31, 32 für Befestigungsmittel zur Verbindung mit dem Tragteil 3 des Modulquerträgers 2 auf. Diese korrespondieren mit den Befestigungslochungen 7 des Tragteils 3.

Die Auflager 25, 26, 27 für das HU Display 1 bestehen aus Kunststoff, wobei vorzugsweise PP oder PA eingesetzt wird. Vorzugsweise wird dieser Kunststoff mit Glasfasern und/oder Kohlefasern verstärkt. Dabei kann der Faserfüllanteil vorzugsweise im Bereich von 30% + 5% liegen.

Zudem bestehen die Auflager 25, 26, 27 aus spritzgießfähigem Werkstoff und weisen jeweils einen Blockkörper 14, 15 an der oberen Randkante 10, 11 des Halters 4, 5 auf, wobei über eine Querung 33 des Halters 4, 5 eine gießtechnische Verbindung mit einem Gegenlager 34, 35 an der Abkantung 16 bzw. 17 der unteren Randkante 12 bzw. 13 hergestellt ist.

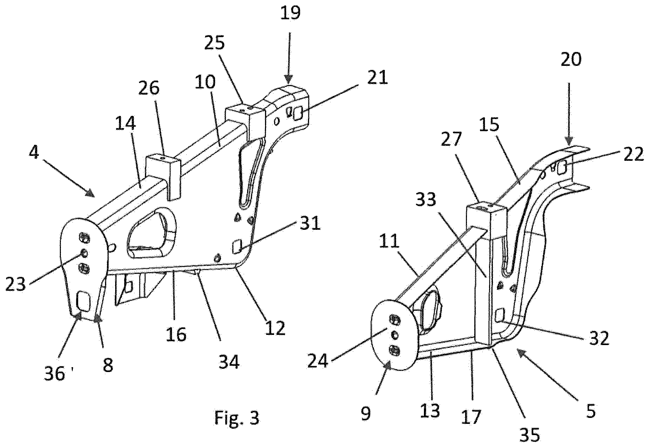

Die Querung ist nur in Figur 3 rechts gezeigt. In Figur 3 links liegt sie auf der Rückseite des Halters 4. Die Gegenlager liegen jeweils an der Unterseite der Abkantung 16 bzw. 17 auf, bzw. sind dort aufgeformt.

In die Auflager 25, 26, 27 sind vorzugsweise Gewindebuchsen aus Edelstahl zur Befestigung des HU Displays 1 eingebracht.

Die plattenförmigen Verbindungslaschen 23, 24 weisen Toleranzausgleichselemente auf, so dass sie gegenüber dem Befestigungspunkt ausrichtbar und festlegbar sind.

Die plattenartige Verbindungslasche 23 weist als Schnittstelle oder Aufnahme für einen Referenzbolzen eine Zentrierbuchse 36, vorzugsweise aus Kunststoff auf, die in die entsprechende Aufnahme 36' eingefügt ist.

Sämtliche Stahlteile der angegebenen Lösung sind mit einer Korrosionsschutzschicht ausgerüstet, vorzugsweise mit einer galvanischen Zinkbeschichtung. Insbesondere die Halter 4, 5 haben eine Blechstärke von vorzugsweise 0,8 mm bis 2,0 mm.

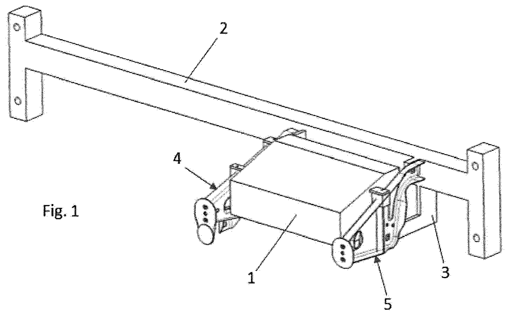

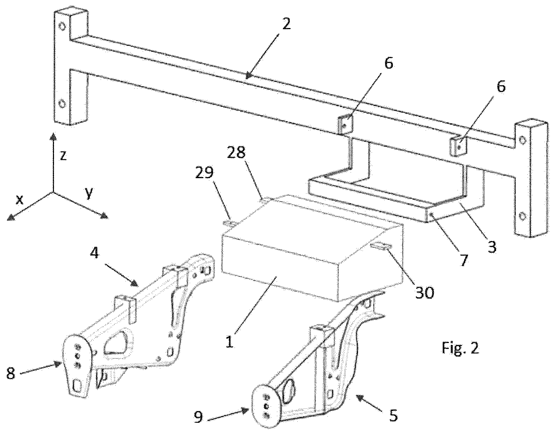

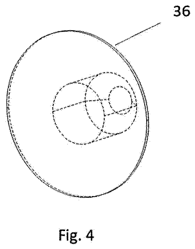

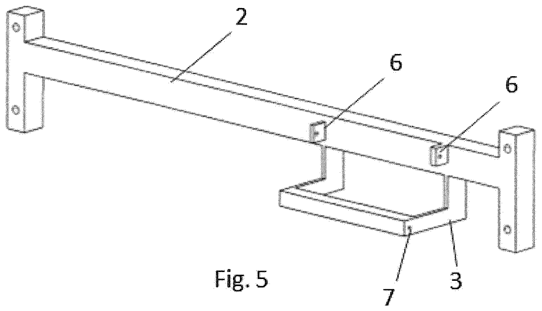

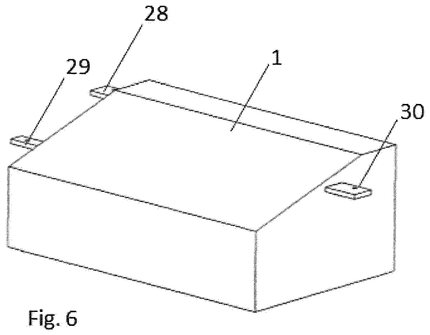

In der Figur 1 sind die Einzelteile in der Zusammenbaulage gezeigt, während sie in Figur 2 in einer Explosionslage gezeigt sind, um die Einzelheiten besser sichtbar zu machen. In Figur 3 sind die Halter 4, 5 in Alleinstellung mit allen notwendigen Merkmalen gezeigt. In Figur 4 ist die Zentrierbuchse 36 gezeigt, die auch in Figur 1 dargestellt ist. In Figur 5 ist der Modulquerträger 2 mit dem daran fixiertem Tragteil 3 als Einzelteil gezeigt, während in Figur 6 ein HU Display 1 gezeigt ist. Wesentliche Bestandteile sind nur schematisch dargestellt und nicht in der Form, wie sie in der Realität eingesetzt werden. Dies gilt insbesondere für das HU Display 1, den Modulquerträger 2 und das Tragteil 3.

Durch die erfindungsgemäße Ausbildung wird insbesondere eine hohe dynamische Steifigkeit der Anbindungsgeometrie für den HUD Projektor erreicht, do dass dieser ein erschütterungsfreies Bild auf die Projektionsfläche, nämlich die Windschutzscheibe des Fahrzeuges projizieren kann.

Die Erfindung ist nicht auf das Ausführungsbeispiel beschränkt, sondern im Rahmen der Offenbarung vielfach variabel.

Alle neuen in der Beschreibung und/oder Zeichnung offenbarten Einzel- und kombinationsmerkmale werden als erfindungswesentlich angesehen.

### Bezugszeichenliste:

1 Head-up-Display
2 Modulquerträger
3 Tragteil an Modulträger
4, 5 Halter für Head-up-Display
6 Laschen
7 Befestigungslaschen
8, 9 freies Endteil von Haltern 4, 5
X Fahrzeuglängsrichtung
Y Fahrzeugquerrichtung
10, 11 gerade obere Randkante von Halter
12, 13 gewinkelte untere Randkante
14, 15, 16, 17 Abkantungen
19, 20 erste Enden von Haltern
21, 22 erste Lochungen für Befestigungsmittel an Tragteil
23, 24 Verbindungslasche
25, 26, 27 Auflager an oberer Randkante für Head-up-Display
28, 29 30 Befestigungsvorsprünge
31, 32 zweite Lochungen für Befestigungsmittel an Tragteil
33 Querung
34, 35 Gegenlager
36 Zentrierbuchse
36' Aufnahme für 36

## Patentansprüche

1. Anordnung zur Befestigung eines Augmented Reality Head-up-Displays (1) in einem Elektrofahrzeug, bestehend aus einem Modulquerträger (2), einem an dem Modulquerträger (2) befestigten oder mit diesem verbundenen Tragteil (3), zwei am Tragteil (3) und am Modulquerträger (2) befestigten , zueinander beabstandet und parallel ausgerichteten Haltern (4, 5) für das Head-up-Display (1), die jeweils ein zu einer vorderen Schottwand einer Karosserie gerichtetes freies Endteil aufweisen, welches mit der Schottwand verbunden ist, wobei die Halter (4, 5) sich in einer X-Richtung, nämlich in Fahrzeuglängsrichtung erstrecken und Schnittstellen zur Anbindung des Head-up-Displays (1) aufweisen, wobei das Tragteil (3) im Bereich der daran befestigten Halter (4, 5) von einer Lenksäule des Elektrofahrzeuges durchgreifbar ist, **dadurch gekennzeichnet, dass** jeder Halter (4, 5) aus einem Formteil aus Stahl besteht, das aus einem flachen Stahlblech mit einer geraden oberen Randkante (10, 11), die in X-Richtung nach vorn gerichtet ist und einer ebenso dorthin gerichteten, gewinkelten unteren Randkante (12, 13) gebildet ist, wobei die Halter (4, 5) in Y-Richtung, quer zur X-Richtung voneinander weg gerichtete Abkantungen (14, 15, 16, 17) an beiden längsverlaufenden Bereichen der Randkanten (10, 11, 12, 13) aufweisen, die an den an dem Tragteil (3) befestigten ersten Enden (19, 20) konvergierend nach Art einer U-förmigen Profilierung zusammengeführt sind und erste Lochungen (21, 22) für Befestigungsmittel zur Befestigung an dem Tragteil aufweisen, und an den dem Modulquerträger (2) abgewandten zweiten Enden konvergierend enden und jeweils stirnseitig eine plattenartige Verbindungslasche (23, 24) aufweisen, wobei die Verbindungslaschen (23, 24) die Schnittstelle zur Schottwand bilden, wobei im Bereich der oberen Randkanten (10, 11) oder deren Abkantungen (14, 15) Auflager (25, 26, 27) für das Stützen und Befestigen des Head-up-Displays (1) ausgebildet sind.

2. Elektrofahrzeug mit einer Anordnung gemäß Anspruch 1, welches eine Karosserie mit mindestens 2 A-Säulen, einer mit der Karosserie verbundenen Windschutzscheibe, wobei der Modulquerträger (2)mit den A-Säulen verbunden ist.

3. Elektrofahrzeug nach Anspruch 2, **dadurch gekennzeichnet, dass** der der Außenseite des Elektrofahrzeuges näherliegende Halter (5) nur ein Auflager (27) für das Head-up-Display (1) aufweist.

4. Elektrofahrzeug nach Anspruch 2 oder 3, **dadurch gekennzeichnet, dass** der der Außenseite des Elektrofahrzeuges ferner liegende Halter (4) zwei voneinander in Längsrichtung beabstandete Auflager (25, 26) für das Head-up-Display (1) aufweist.

5. Elektrofahrzeuge nach einem der Ansprüche 2 bis 4, **dadurch gekennzeichnet, dass** jeder Halter (4, 5) nahe des ersten Endes (19, 20) zwischen den Abkantungen (14, 15, 16, 17) die ersten Lochungen (21, 22) für Befestigungsmittel zur Verbindung mit dem Tragteil (3) des Modulquerträgers (2) aufweist.

6. Elektrofahrzeug nach einem der Ansprüche 2 bis 5, **dadurch gekennzeichnet, dass** jeder Halter (4, 5) nahe der gewinkelten unteren Randkante (12, 13) und zwar auch nahe des Winkels zweite Lochungen (31, 32) für Befestigungsmittel zur Verbindung mit dem Tragteil (3) des Modulquerträgers (2) aufweist.

7. Elektrofahrzeug nach einem der Ansprüche 2 bis 6, **dadurch gekennzeichnet, dass** die Auflager (25, 26, 27) für das Head-up-Display (1) aus Kunststoff bestehen, vorzugsweise aus PP oder PA, vorzugsweise mit Glas- und/ oder Kohlefasern verstärkt, wobei der Faserfüllanteil vorzugsweise bei 30% + 5% liegt.

8. Elektrofahrzeug nach einem der Ansprüche 2 bis 7, **dadurch gekennzeichnet, dass** die Auflager (25, 26, 27) aus spritzfähigem Werkstoff bestehen und jeweils einen Blockkörper mit eingesetztem Gewinde an der Abkantung (14, 15) der oberen Randkante (10, 11) des Halters (4, 5) aufweisen, der über eine Querung (33) am Halter (4, 5) mit einem Gegenlager (34, 35) an der Abkantung (16, 17) der unteren Randkante (12, 13) gießtechnisch verbunden ist.

9. Elektrofahrzeug nach einem der Ansprüche 2 bis 8, **dadurch gekennzeichnet, dass** die plattenförmigen Halter (4, 5) in Richtung X und Z einstellbar sind.

10. Elektrofahrzeug nach einem der Ansprüche 2 bis 9, **dadurch gekennzeichnet, dass** in die Auflager (25, 26, 27) Gewindebuchsen aus Edelstahl zur Befestigung des Head-up-Displays (1) eingebracht sind.

11. Elektrofahrzeug nach einem der Ansprüche 2 bis 10, **dadurch gekennzeichnet, dass** mindestens eine plattenartige Verbindungslasche (23, 24) eine Schnittstelle oder Aufnahme, insbesondere eine Zentrierungsbuchse (36), als Toleranzausgleichselement für einen Referenzbolzen aufweist, welcher an der Schottwand oder Stirnwand des Fahrzeugs befestigt ist.

12. Elektrofahrzeug nach einem der Ansprüche 2 bis 11, **dadurch gekennzeichnet, dass** die Stahlteile mit einer Korrosionsschutzschicht ausgerüstet sind, vorzugsweise einer galvanischen Zink-Beschichtung.

## Claims

1. An arrangement for fastening an augmented reality head-up display (1) in an electric vehicle, comprising a module cross member (2), a support part (3) fastened to the module cross member (2) or connected thereto, two holders (4, 5) for the head-up display (1), which are fastened to the support part (3) and to the module cross member (2) and are aligned parallel to and at a distance from one another, which each have a free end part, which is directed towards a front bulkhead of a vehicle body and which is connected to the bulkhead, the holders (4, 5) extending in an X-direction, namely in the longitudinal direction of the vehicle, and having interfaces for connecting the head-up display (1), it being possible for a steering column of the electric vehicle to reach through the support part (3) in the region of the holders (4, 5) fastened thereto, **characterized in that** each holder (4, 5) consists of a shaped part made of steel, which is formed from a flat steel sheet with a straight upper marginal edge (10, 11), which is directed forwards in the X-direction, and an angled lower marginal edge (12, 13), which is also directed forwards, the holders (4, 5) having folded edges (14, 15, 16, 17) directed away from each other in the Y-direction, transversely to the X-direction, on both longitudinally extending regions of the marginal edges (10, 11, 12, 13), which converge at the first ends (19, 20) attached to the support part (3) in the manner of a U-shaped profile and have first perforations (21, 22) for fastening means for fastening to the support part, and converge at the second ends facing away from the module cross member (2) and each have a plate-like connecting tab (23, 24) at the front, the connecting tabs (23, 24) forming the interface to the bulkhead, seats (25, 26, 27) for supporting and fastening the head-up display (1) being formed in the region of the upper marginal edges (10, 11) or their folded edges (14, 15).

2. An electric vehicle with an arrangement according to claim 1, which has a body with at least 2 A-pillars, a windshield connected to the body, the module cross member (2) being connected to the A-pillars.

3. The electric vehicle according to claim 2, **characterized in that** the holder (5) located closer to the outside of the electric vehicle has only one seat (27) for the head-up display (1).

4. The electric vehicle according to claim 2 or 3, **characterized in that** the holder (4) located further away from the outside of the electric vehicle has two seats (25, 26) for the head-up display (1), which are spaced apart from one another in the longitudinal direction.

5. The electric vehicle according to one of claims 2 to 4, **characterized in that** each holder (4, 5) has, near the first end (19, 20) between the folded edges (14, 15, 16, 17), the first perforations (21, 22) for fastening means for connection to the support part (3) of the module cross member (2).

6. The electric vehicle according to one of claims 2 to 5, **characterized in that** each holder (4, 5) has, near the angled lower marginal edge (12, 13) and indeed also near the angle, second perforations (31, 32) for fastening means for connection to the support part (3) of the module cross member (2).

7. Electric vehicle according to one of claims 2 to 6, **characterized in that** the seats (25, 26, 27) for the head-up display (1) are made of plastic, preferably PP or PA, preferably reinforced with glass and/or carbon fibers, the fiber filler content preferably being 30% ± 5%.

8. The electric vehicle according to one of claims 2 to 7, **characterized in that** the seats (25, 26, 27) are made of injection-moldable material and each have a block body with an inserted thread on the folded edge (14, 15) of the upper marginal edge (10, 11) of the holder (4, 5), which is connected by casting via a cross-piece (33) on the holder (4, 5) to a counter-support (34, 35) on the folded edge (16, 17) of the lower marginal edge (12, 13).

9. The electric vehicle according to one of claims 2 to 8, **characterized in that** the plate-shaped holders (4, 5) are adjustable in the X and Z directions.

10. The electric vehicle according to one of claims 2 to 9, **characterized in that** threaded bushes made of stainless steel are inserted into the seats (25, 26, 27) for fastening the head-up display (1).

11. The electric vehicle according to one of claims 2 to 10, **characterized in that** at least one plate-like connecting tab (23, 24) has an interface or receptacle, in particular a centering bush (36), as a tolerance compensation element for a reference bolt, which is fastened to the bulkhead or front wall of the vehicle.

12. The electric vehicle according to one of claims 2 to 11, **characterized in that** the steel parts are provided with an anti-corrosion coating, preferably a galvanic zinc coating.

## Revendications

1. Dispositif de fixation d'un affichage tête haute à réalité augmentée (1) dans un véhicule électrique, comprenant une traverse de module (2), une pièce de support (3) fixée à la traverse de module (2) ou reliée à celle-ci, deux supports (4, 5) pour l'affichage tête haute (1) qui sont fixés à la pièce de support (3) et à la traverse de module (2) et sont alignés parallèlement et à distance l'un de l'autre, qui ont chacun une partie d'extrémité libre qui est dirigée vers une cloison avant d'une carrosserie de véhicule et qui est reliée à la cloison, les supports (4, 5) s'étendant dans une direction X, les supports (4, 5) s'étendent dans la direction X, c'est-à-dire dans la direction longitudinale du véhicule, et comportent des interfaces pour la connexion de l'affichage tête haute (1), la colonne de direction du véhicule électrique pouvant traverser la pièce de support (3) au niveau des supports (4, 5) qui y sont fixés, **caractérisé en ce que** chaque support (4, 5) est constitué d'une pièce de forme en acier, formée d'une tôle d'acier plate avec un bord marginal supérieur droit (10, 11), orienté vers l'avant dans la direction X, et un bord marginal inférieur angulaire (12, 13) aussi orienté vers l'avant, les supports (4, 5) ayant des bords repliés (14, 15, 16, 17) dirigés à l'opposé l'un de l'autre dans la direction Y, transversalement à la direction X, sur les deux régions s'étendant longitudinalement des bords marginaux (10, 11, 12, 13), qui sont réunis de manière convergeante aux premières extrémités (19, 20) attachées à la pièce de support (3) à la manière d'un profil en U et présentent des premières perforations (21, 22) pour des moyens de fixation à la pièce de support, et se terminent de manière convergeante aux deuxièmes extrémités orientées à l'opposé de la traverse de module (2) et présentent chacun une languette de connexion en forme de plaque (23, 24), les languettes de connexion (23, 24) formant l'interface avec la cloison, des appuis (25, 26, 27) destinés à soutenir et à fixer l'affichage tête haute (1) étant formés au niveau des bords marginaux supérieurs (10, 11) ou de leurs bords repliés (14, 15).

2. Véhicule électrique équipé d'un dispositif selon la revendication 1, qui comporte une carrosserie avec au moins 2 montants A, un pare-brise relié à la carrosserie, la traverse de module (2) étant reliée aux montants A.

3. Véhicule électrique selon la revendication 2, **caractérisé en ce que** le support (5) situé plus proche de l'extérieur du véhicule électrique ne comporte qu'un seul appui (27) pour l'affichage tête haute (1).

4. Véhicule électrique selon la revendication 2 ou 3, **caractérisé en ce que** le support (4) situé plus loin de l'extérieur du véhicule électrique comporte deux appuis (25, 26) pour l'affichage tête haute (1) qui sont espacés l'un de l'autre dans la direction longitudinale.

5. Véhicule électrique selon l'une des revendications 2 à 4, **caractérisé en ce que** chaque support (4, 5) présente, à proximité de la première extrémité (19, 20) entre les bords repliés (14, 15, 16, 17), les premières perforations (21, 22) pour les moyens de fixation à la pièce de support (3) de la traverse de module (2).

6. Véhicule électrique selon l'une des revendications 2 à 5, **caractérisé en ce que** chaque support (4, 5) présente, à proximité du bord marginal inférieur angulaire (12, 13) et même à proximité de l'angle, des deuxièmes perforations (31, 32) pour les moyens de fixation à la pièce de support (3) de la traverse de module (2).

7. Véhicule électrique selon l'une des revendications 2 à 6, **caractérisé en ce que** les appuis (25, 26, 27) pour l'affichage tête haute (1) sont en matière plastique, de préférence en PP ou PA, de préférence renforcés par des fibres de verre et/ou de carbone, la teneur de remplissage en fibres étant de préférence de 30 % ± 5 %.

8. Véhicule électrique selon l'une des revendications 2 à 7, **caractérisé en ce que** les appuis (25, 26, 27) sont en matériau injectable et ont chacun un corps de bloc avec un filet inséré sur le bord replié (14, 15) du bord marginal supérieur (10, 11) du support (4, 5), qui est relié par moulage par l'intermédiaire d'une pièce transversale (33) sur le support (4, 5) à une butée (34, 35) sur le bord replié (16, 17) du bord marginal inférieur (12, 13).

9. Véhicule électrique selon l'une des revendications 2 à 8, **caractérisé en ce que** les supports en forme de plaque (4, 5) sont réglables dans les directions X et Z.

10. Véhicule électrique selon l'une des revendications 2 à 9, **caractérisé en ce que** des douilles filetées en acier inoxydable sont insérées dans les appuis (25, 26, 27) pour la fixation de l'affichage tête haute (1).

11. Véhicule électrique selon l'une des revendications 2 à 10, **caractérisé en ce qu'**au moins une languette de connexion en forme de plaque (23, 24) possède une interface ou un réceptacle, en particulier une douille de centrage (36), comme élément de compensation de tolérance pour un boulon de référence, qui est fixé à la cloison ou à la paroi frontale du véhicule.

12. Véhicule électrique selon l'une des revendications 2 à 11, **caractérisé en ce que** les pièces en acier sont pourvues d'un revêtement anticorrosion, de préférence d'un revêtement de zinc galvanique.
